# EUROPEAN PATENT APPLICATION

(11) **EP 1 510 907 A2**
(43) Date of publication of application: **02.03.2005**
(21) Application number: 04020202.0
(22) Date of filing: 25.08.2004
(51) Int. Cl.: G06F 1/16

(54) **Teaching operation unit having touch panel**

(30) Priority: 29.08.2003 JP 2003307353
(71) Applicant: FANUC LTD, Minamitsuru-gun, Yamanashi 401-0597 (JP)
(72) Inventor: Kinoshita, Satoshi, Minamitsuru-gun Yamanashi 401-0511 (JP); Kuroki, Toshikatsu, Minamitsuru-gun Yamanashi 401-0511 (JP)
(74) Representative: Schmidt, Steffen J., Dipl.-Ing.

(57) **Abstract**

A teaching operation unit having a touch panel. The teaching operation unit is provided with a housing including a display window; a display unit accommodated in the housing and including a screen visible through the display window; a touch panel accommodated in the housing to be disposed between the display window and the screen of the display unit, and including an input area operable through the display window; a frame accommodated in the housing to be disposed between the display window and the touch panel; and a protective sheet covering the input area of the touch panel in a non-contact manner. The frame includes a sheet support extending inward along a peripheral edge of the display window, the sheet support defining an opening for allowing an operation of the input area. The protective sheet is supported by the sheet support of the frame to be disposed in the display window.

## Description

### BACKGROUND OF THE INVENTION

### 1. Field of the Invention

The present invention relates to a teaching operation unit provided with a touch panel (i.e., a panel-type input device).

### 2. Description of the Related Art

Recently, a display system provided with a touch panel in front of a screen of a display unit has been widely used for various apparatuses, and has been applied to, e.g., a teaching operation unit or console used for operating and/or teaching a robot. A touch panel (e.g., a resistive type touch panel) is used for inputting two-dimensional coordinate data by applying a pressing force to a predetermined input (or reaction) area in a panel surface. The system has been mostly used with the touch panel mounted onto an apparatus with the surface thereof being directly exposed to an environment and is operated by directly touching a finger or a pen to the exposed surface of the touch panel, for the purpose of a structural simplification, an improvement of response, an improvement of visibility, and so on.

However, in the case where the touch panel is mounted to the teaching operation unit used for a robot, it is necessary to improve the environmental durability of the touch panel. As the robot is usually used in a contaminated environment, such as a job site in a factory or others, wherein the splash or adhesion of dust, water or oil is unavoidable, a life of the touch panel may be significantly shortened if a teaching operation unit in which the exposed surface of the touch panel is directly touched by a finger is used. In other words, in addition to the fact that the touch panel is contaminated with dust, oil or water, the operator frequently pushes or rubs a certain point on the surface of the contaminated touch panel with his dirt finger, so that the deterioration of a panel material (e.g., a resinous film) in this certain point may be accelerated.

In order to solve this surface contamination problem, a system has been proposed wherein a protective sheet is disposed on the surface of the touch panel. For example, Japanese Unexamined Patent Publication (Kokai) No. 2002-304254 (JP-A-2002-304254) discloses a protective structure for a touch panel provided in a front side of a display unit in, e.g., an operating section of a copy machine. The protective structure is formed by stacking and affixing a plurality of protective sheets on the surface of the touch panel with an adhesive. In this structure, as the adhesive is interposed between the lowermost protective sheet and the touch panel surface, the touch panel may be unintentionally or unexpectedly operated under the influence of the adhesive. Also, as the plurality of superimposed protective sheets is used, there may be a risk of the deterioration in visibility of the display unit.

Also, Japanese Unexamined Patent Publication (Kokai) No. 2002-329978 (JP-A-2002-329978) discloses an information processing apparatus wherein a protective sheet is disposed above a surface of a touch panel provided in the front side of a display unit through a predetermined gap with a support member having a predetermined thickness being interposed therebetween. In this structure, as a clearance is maintained between the protective sheet and the touch panel surface, the unintentional operation or malfunction of the touch panel due to a contact with the protective sheet is not liable to be caused during a non-operated condition. On the other hand, the protective sheet is structured to hermetically seal a display section due to the fact that the outer peripheral edge region of the protective sheet extends to the back of a periphery of a window provided in a housing of the information processing apparatus (i.e., the inner side of the housing), the window being formed for observing a screen of the display unit. Thus, there is a problem in that it is not easy to exchange the protective sheet if the protective sheet is contaminated or damaged.

Conventionally, as described above, in the case where the touch panel is mounted to the apparatus with the surface thereof exposed outside, the panel surface may be contaminated or damaged when used under an unfavorable environment, or in the case where the surface of the touch panel is covered with the protective sheet, the operational reliability of the touch panel may be lowered or the exchange of the protective sheet may become difficult. Further, in the case where the surface of the touch panel is covered with the protective sheet, the touch panel is operated via the protective sheet and, thereby, the touch panel may be continuously turned on at a local point due to the deformation or deterioration of the protective sheet or the penetration of foreign matter into a gap between the protective sheet and the panel surface.

Moreover, the surface of the touch panel is often made rough for the purpose of glare reduction, and if the panel surface is covered with the protective sheet, it is required that the surface of the protective sheet, disposed as the outermost sheet, is subjected to a glare-reduction treatment. Conventionally, in order to satisfy such a requirement, both of the surfaces of the touch panel and the protective sheet are treated with the glare-reduction treatment, and as a result, the visibility of the screen of the display unit may be lowered due to an increase in light-scattering or light-absorption caused by the surface-roughening.

### SUMMARY OF THE INVENTION

It is an object of the present invention to provide a teaching operation unit or console with a touch panel incorporated therein, which includes a protective sheet for preventing the life of the touch panel from being reduced due to damage to, or contamination of, the panel surface, and which can prevent an unintentional operation or malfunction caused by the contact of the protective sheet with the panel surface and allows an easy exchange of the protective sheet.

To accomplish the above object, the present invention provides a teaching operation unit, comprising a housing including a display window; a display unit accommodated in the housing, the display unit including a screen visible through the display window; a touch panel accommodated in the housing to be disposed between the display window and the screen of the display unit, the touch panel including an input area operable through the display window; a frame accommodated in the housing to be disposed between the display window and the touch panel, the frame including a sheet support extending inward along a peripheral edge of the display window, the sheet support defining an opening for allowing an operation of the input area; and a protective sheet supported by the sheet support of the frame to be disposed in the display window, the protective sheet covering the input area of the touch panel in a non-contact manner.

In the above teaching operation unit, the touch panel may include a non-input area located outside of the input area; and the frame may include a base abutted to the non-input area.

Also, the frame may include a housing abutment located outside of the sheet support, the housing abutment being abutted to a peripheral region of the housing extending along the peripheral edge of the display window.

Also, the frame may include a spacer part defining a gap of a predetermined dimension, between the protective sheet and the touch panel.

In this arrangement, the spacer part of the frame may define a gap of a predetermined dimension, between a peripheral region of the housing extending along the peripheral edge of the display window and the touch panel; and a packing material may is disposed in the gap.

The teaching operation may further comprise a processing section for processing and detecting an input operation in the input area of the touch panel, and a monitoring section for monitoring a state of the input operation detected in the processing section; and the monitoring section may output an alarm signal when the processing section detects that the input operation continues at a constant position in the input area for at least a predetermined period.

Also, a surface of the protective sheet may be treated with a glare-reduction treatment but a surface of the touch panel is not treated with a glare-reduction treatment.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a schematic perspective view showing an appearance of a teaching operation unit with a touch panel incorporated in a display section, according to one embodiment of the present invention;
Fig. 2 is a sectional view showing the display section of the teaching operation unit, taken along a line II-II of Fig. 1;
Fig. 3 is a functional block diagram showing a teaching operation unit, according to another embodiment of the invention, having a function for indicating an abnormal contact in the touch panel; and
Fig. 4 is a flow chart illustrating an abnormal-contact indicating process in the teaching operation unit of Fig. 3.

### DETAILED DESCRIPTION

The embodiments of the present invention are described, below, in detail and with reference to the accompanying drawings. In the drawings, the same or similar components are denoted by common reference numerals.

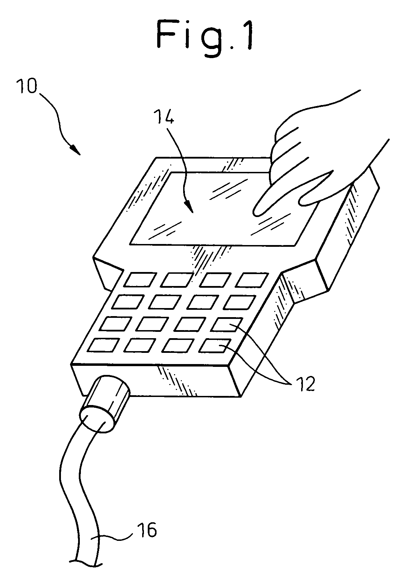

Referring to the drawings, Fig. 1 illustrates a teaching operation unit 10 according to one embodiment of the present invention. The teaching operation unit 10 is provided on a front side thereof with various operation keys (a manual operating key, a position-data input key, etc.) 12 and a display section 14. The teaching operation unit 10 is connected to a robot control unit (not shown) through a connecting cable 16.

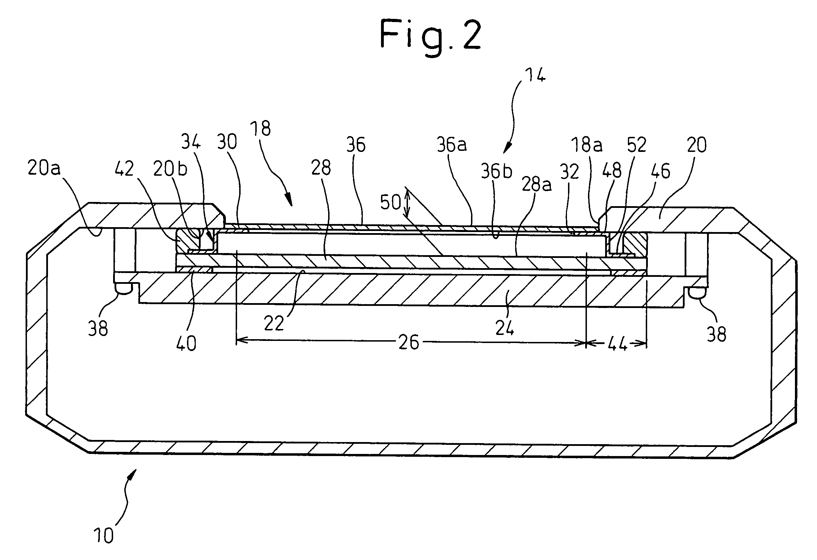

Particularly, in association with the structure of the display section 14, the teaching operation unit 10 includes, as shown in Fig. 2, a housing 20 including a display window 18; a display unit 24 accommodated in the housing 20 and including a screen 22 visible through the display window 18; a touch panel 28 accommodated in the housing 20 to be disposed between the display window 18 and the screen 22 of the display unit 24, and including an input (or reaction) area 26 operable through the display window 18; a frame 34 accommodated in the housing 20 to be disposed between the display window 18 and the touch panel 28, and including a sheet support 30 extending inward along a peripheral edge 18a of the display window 18, the sheet support 30 defining an opening 32 for allowing an operation of the input area 26 of the touch panel 28; and a protective sheet 36 supported by the sheet support 30 of the frame 34 to be disposed in the display window 18, and covering the input area 26 of the touch panel 28 in a non-contact manner.

In more detail, and with reference to the drawing, the display window 18 is formed in the housing 20 as an opening for allowing the screen 22 of the display unit 24 to be visibly observed, and the display unit 24 and the touch panel 28 are provided beneath the display window 18. The display unit 24 is fixed to a inner surface (or a rear surface) 20a of the housing 20 with a plurality of screws 38, and the touch panel 28 is disposed in front of the screen 22 thereof with a gap defined by a spacer (e.g., an annular plate) 40. To ensure the hermetical condition of the interior of the teaching operation unit 10 (particularly, of the display section 14), the outer circumferential region of the touch panel 28 is pressed onto the inner surface 20a of the housing 20 through a compressible packing material (e.g., an O-ring) 42. Further, the frame 34, having a height (a structural thickness) equal to that of the packing material 42 depressed by assembling the display section 14, is interposed between the outer circumferential region of the touch panel 28 and a peripheral region 20b of the inner surface 20a of the housing 20 along the peripheral edge 18a of the display window 18.

The touch panel 28 is structured to define the input area 26 slightly smaller than the opening 32 of the frame 34, and a non-input (non-reaction) area 44 is provided around the outer circumference region outside of the input area 26. The frame 34 includes an annular base 46, which in turn is abutted to, and supported by, the non-input area 44 of the touch panel 28. The packing material 42 is abutted to the non-input area 44 of the touch panel 28 further outside of the base 46 of the frame 34. Accordingly, the touch panel 28 is prevented from being unintentionally or unexpectedly operated due to the contact with the packing material 42 or the frame 34.

The frame 34 includes the opening 32 shaped to be slightly smaller than the display window 18 so as to ensure the shelf-like sheet support 30 formed along the peripheral edge 18a of the display window 18. It is possible to readily dispose the protective sheet 36 at a front side of the touch panel 28 by using the sheet support 30. In this arrangement, it is advantageous that an adhesive having an adhesion force suitable to prevent the peeling-off of the protective sheet 36 during a touch-input operation is applied to the surface of the sheet support 30 and/or the corresponding surface along the outer circumference of the protective sheet 36, so as to affix the protective sheet 36 to the sheet support 30 with the adhesive. In the case where the protective sheet 36 should be exchanged due to long use and so on, it is possible to peel off the old protective sheet 36 from the sheet support 30 of the frame 34, and then to affix a fresh protective sheet 36 to the sheet support 30 using the adhesive.

The protective sheet 36 is made of an optically transmissible resinous sheet having an appropriate elasticity (or flexibility), and the surface (the upper surface or the upper and lower surfaces) 36a thereof is subjected to a glare-reduction treatment by surface-roughening. In this regard, a sufficient glare-reduction effect is obtainable by applying the glare-reduction treatment to the surface 36a of the protective sheet 36, and it is required to maintain the optical transmission at a high level for facilitating the observation of the screen 22 of the display unit 24, so that it is preferred that the surface 28a of the touch panel 28 is not treated with the glare-reduction treatment.

The frame 34 further includes a housing abutment 48 located outside of the sheet support 30, which is abutted to the peripheral region 20b of the housing 20 extending along the peripheral edge 18a of the display window 18. The housing abutment 48 has an annular flat surface extending in contact with the inner surface 20a of the housing 20. Also, the frame 34 further includes a spacer part 52 for defining a gap 50 having a predetermined dimension between the protective sheet 36 and the touch panel 28. The spacer part 52 extends downward through a bend from the outer edge of the housing abutment 48. Further, the base 46 extends outward, through a bend from a lower end of the spacer part 52, along the surface 28a of the touch panel 28. Thus, the frame 34 provides the sheet support 30 for the protective sheet 36 adhered thereto at a position spaced from the surface (the upper surface) 28a of the touch panel 28 by a distance corresponding to the height of the spacer part 52. As a result, the gap 50 is ensured between the upper surface 28a of the touch panel 28 and the lower surface 36b of the protective sheet 36, and the packing material 42 is disposed in the gap 50.

The gap 50 is dimensioned so that, when the operator presses a desired portion of the protective sheet 36, corresponding to the input area 26 of the touch panel 28, with his finger (Fig. 1) at a normal pressing force, the protective sheet 36 can be bent to apply a pressing force necessary for the input operation against the corresponding point of the touch panel 28. On the other hand, if the gap 50 is excessively small, it may cause the unintentional operation or malfunction due to the contact with the protective sheet 36 during the non-operating condition of the touch panel 28, so that it is desired to select an appropriate dimension of the gap 50 provided that the unintentional operation does not occur.

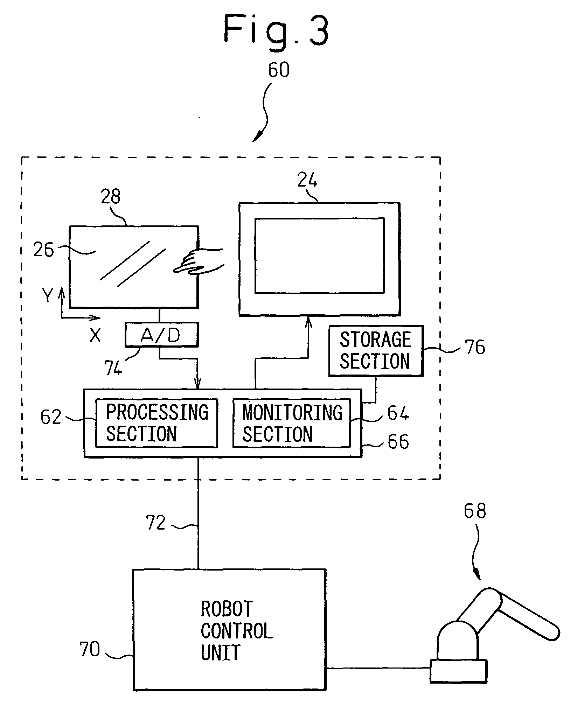

Fig. 3 is a functional block diagram of a teaching operation unit 60, according to another embodiment of the invention, having a function for indicating an abnormal contact in the touch panel. As the teaching operation unit 60 according to this embodiment has a structure similar to the above-described teaching operation unit 10, except for the provision of the abnormal-contact indicating function, the corresponding components are denoted by common reference numerals and an explanation thereof is not repeated.

The teaching operation unit 60 includes a processing section 62 for detecting an input operation in the input area 26 of the touch panel 28 and arithmetically processing the input operation, and a monitoring section 64 for monitoring the state of the input operation detected in the processing section 62. The monitoring section 64 outputs an alarm signal, as described later, when the input operation continues at a constant position in the input area 26 for at least a predetermined period. In the illustrated embodiment, the processing section 62 and the monitoring section 64 are realized by a single CPU 66. The CPU 66 of the teaching operation unit 60 is able to communicate with a robot control unit 70 for controlling a robot 68 through a connecting cable 72.

In the teaching operation unit 60, when the operator's finger or a pen touches the input area 26 of the touch panel 28 via the protective sheet 36 (Fig. 2), a two-channel analog value representing a touched position on the touch panel 28 is output. This analog value is converted to a digital value by an A/D converter 74, and is recognized as two-dimensional (X, Y) coordinate data by the processing section 62.

The processing section 62 judges which one of various command functions of the teaching operation unit 60, such as an operation command of the robot 68 issued to the robot control unit 70 or a display command issued to the display unit 24, corresponds to the detected coordinate data, and executes the process corresponding to the judged command. Thereby, the robot control unit 70 executes the actuation, suspension and operation of the robot 68, an I/O control, the edition of programs or system variables, and so on.

In addition to the command functions relating to the robot control, the teaching operation unit 60 is able to indicate an abnormal contact (or an abnormal input) in the touch panel 28 by a function such that the monitoring section 64 monitors the state of the input operation detected by the processing section 62. If the monitoring section 64 has determined that the constant point in the input area 26 of the touch panel 28 is maintained in an ON-state (or a reacting state under a pressing force) during at least a predetermined period T0, the monitoring section 64 issues an alarm signal, and thus can, e.g., have the display unit 24 display an alarm screen previously provided in a storage section 76. The alarm screen may include a warning phrase of, e.g., "there is a possibility in that the touch panel is not normal", and also may indicate a switch button for switching between the valid and invalid states of the input function of the touch panel 28. The switch button may be arranged to be selectable by an operation key 12 (Fig. 1) provided separately from the touch panel 28 in the teaching operation unit 60.

The monitoring section 64 may also be configured to output an alarm signal to the robot control unit 70, so as to apply a certain restriction to the operation of the robot 68. For example, if an emergency stop circuit (not shown) is operated by the alarm signal, to disable the robot 68, it is possible to immediately ensure the safety of the operator.

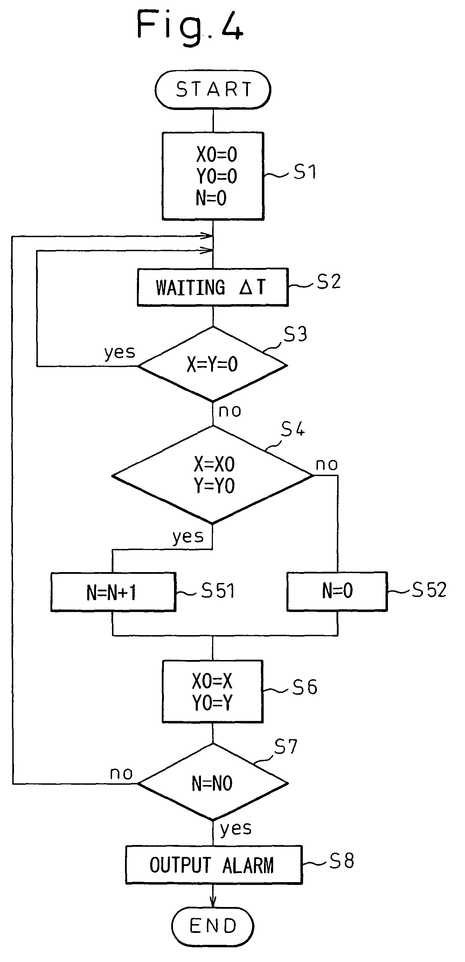

Fig. 4 is a flow chart illustrating one example of the abnormal-contact indicating process in the monitoring section 64, which detects a condition where the constant position in the input area 26 of the touch panel 28 is continuously in an on-state during at least the predetermined period T0. The illustrated abnormal-contact indicating process is automatically started when an power source of the teaching operation unit 10 is turned on, and automatically stopped in a forcible manner when the power source is turned off.

The coordinate values X, Y of the touch panel 28, which are detected by the processing section 62 of the CPU 66 as the state of the input operation, indicate that, if X=Y=0, no point in the input area 26 is pressed, and that, if either one of X and Y is other than 0, the coordinate point in the input area 26, corresponding to the detected values, is pressed. Further, a monitoring period Δt of the monitoring section 64 and a positive integer N0 as an alarm output reference are previously set and stored in the storage section 76. The values N0 and Δt are determined to be T0=N0×Δt. For example, if Δt=0.1 (second) and N0=100, T0=10 (sec.).

The respective steps in the process flow are summarized as follows:
Step S1 ... Set a value "0" in each of registers X0, Y0 and N.
Step S2 ... Wait a period Δt.
Step S3 ... Recognize the input operation in the coordinates X, Y in the touch panel, determine that there is no input if both the coordinate values are 0 and thus return to step S1, and determine that there is an input if either one of the coordinates is other than 0 and thus go to step S4.
Step S4 ... Determine whether the present input values of coordinates X, Y in the touch panel 28 are identical to coordinate values in the registers X0, Y0 at Δt ago by comparison.
Step S51 ... If the judgment is "identical" at step S4, add an increment "1" to the register N.
Step S52 ... If the judgment is not "identical" at step S4, maintain the register N at "0".
Step S6 ... Set the present values of coordinates X, Y into the registers X0, Y0, respectively.
Step S7 ... Compare the value in the register N with "N0" and, if not identical, return to step S2. According to this step, if the constant X and Y coordinate values are continuously input during "T0", steps S2 to S7 are repeated "N0" times. Then, the value in the register N reaches "N0", go to step S8.
Step S8 ... Output an alarm signal.

According to the above-described process flow, it is possible to quickly output the alarm signal in response to the detection of the unexpected input in the touch panel 28 caused by the contact of the protective sheet 36 to the touch panel 28 due to, e.g., the deformation of the protective sheet 36, or by a failure of the touch panel 28.

As apparent from the above description, according to the teaching operation unit of the present invention, the touch panel is not directly touched by a finger, due to the presence of the protective sheet, and thereby it is possible to prevent the touch panel from being contaminated or damaged. Also, when the protective sheet is required to be changed to new one due to, e.g., long use, it is possible to readily exchange the protective sheet alone. Further, as the protective sheet is disposed apart from the touch panel by a gap corresponding to the thickness of the frame, an unexpected contact of the protective sheet to the touch panel and the unintentional operation or malfunction accompanied therewith is avoidable. In the case where the abnormal-contact indicating function is provided to the teaching operation unit, it is possible to detect inconveniences caused by, e.g., long use, such as the deformation, damage or deterioration of the protective sheet, the penetration of foreign matters into the gap, and/or the failure of the touch panel, because these inconveniences are monitored as the abnormal state wherein a particular portion in the touch panel is being continuously pressed for a long time. Accordingly, it is possible to take safety countermeasures, by issuing the alarm signal in correspondence to the detection of the inconveniences, such as to inform an operator with the unintentional operation or malfunction of the touch panel, to make the function of the touch panel ineffective, or to make the operation of the teaching operation unit impossible, by the alarm signal. In addition, it is possible to prevent the deterioration of the visibility of the display unit due to the addition of the protective sheet, by treating a glare-reduction treatment on only the protective sheet.

While the invention has been described with reference to specific preferred embodiments, it will be understood by those skilled in the art that various changes and modifications may be made thereto without departing from the spirit and scope of the following claims.

## Claims

1. A teaching operation unit, comprising:
a housing including a display window;
a display unit accommodated in said housing, said display unit including a screen visible through said display window;
a touch panel accommodated in said housing to be disposed between said display window and said screen of said display unit, said touch panel including an input area operable through said display window;
a frame accommodated in said housing to be disposed between said display window and said touch panel, said frame including a sheet support extending inward along a peripheral edge of said display window, said sheet support defining an opening for allowing an operation of said input area; and
a protective sheet supported by said sheet support of said frame to be disposed in said display window, said protective sheet covering said input area of said touch panel in a non-contact manner.

2. A teaching operation unit as defined by claim 1, wherein said touch panel includes a non-input area located outside of said input area; and wherein said frame includes a base abutted to said non-input area.

3. A teaching operation unit as defined by claim 1, wherein said frame includes a housing abutment located outside of said sheet support, said housing abutment being abutted to a peripheral region of said housing extending along said peripheral edge of said display window.

4. A teaching operation unit as defined by claim 1, wherein said frame includes a spacer part defining a gap of a predetermined dimension, between said protective sheet and said touch panel.

5. A teaching operation unit as defined by claim 4, wherein said spacer part of said frame defines a gap of a predetermined dimension, between a peripheral region of said housing extending along said peripheral edge of said display window and said touch panel; and wherein a packing material is disposed in said gap.

6. A teaching operation unit as defined by claim 1, further comprising a processing section for processing and detecting an input operation in said input area of said touch panel, and a monitoring section for monitoring a state of said input operation detected in said processing section; wherein said monitoring section outputs an alarm signal when said processing section detects that said input operation continues at a constant position in said input area for at least a predetermined period.

7. A teaching operation unit as defined by claim 1, wherein a surface of said protective sheet is treated with a glare-reduction treatment but a surface of said touch panel is not treated with a glare-reduction treatment.
